# EUROPÄISCHE PATENTANMELDUNG

(11) **EP 1 333 052 A1**
(43) Veröffentlichungstag der Anmeldung: **06.08.2003**
(21) Anmeldenummer: 02028270.3
(22) Anmeldetag: 16.12.2002
(51) Int. Cl.: C08K 3/22, B32B 27/20, B32B 27/34, C08K 9/04

(54) **Hydraulikleitungen mit Hochbarriereschicht aus Polyamid mit Nanopartikeln**

(30) Priorität: 04.02.2002 DE 10204395
(71) Anmelder: EMS-Chemie AG, 7013 Domat/Ems (CH)
(72) Erfinder: Stöppelmann, Georg Dr.rer.nat., 7402 Bonaduz (CH); Hoffmann, Michael, Dipl.-Techn., 7402 Bonaduz (CH)
(74) Vertreter: Becker Kurig Straus

(57) **Zusammenfassung**

Die Erfindung betrifft eine Hydraulikleitung für Fahrzeuge auf Basis von thermoplastischen Polymeren, enthaltend mindestens eine Schicht aus einer Formmasse auf Basis von Polyamid, wobei die Polyamid-Formmasse nanoskalige Füllstoffe in einer Menge von 0,5 bis 50 Gew.-%, insbesondere in einer Menge von 1 bis 30 Gew.-%, pro 100 Gewichtsteilen der Polymermatrix enthält.

## Beschreibung

Die vorliegende Erfindung betrifft neuartige Leitungen auf Basis von Polyamiden zum Transport von hydraulischen Medien, wie z.B. von Hydraulikflüssigkeiten bzw. -ölen, die der Kraftübertragung z. B. in Bremsen und Kupplungen dienen. Die erfindungsgemäßen Hydraulikleitungen zeichnen sich durch eine verbesserte Barrierewirkung, speziell gegenüber der Permeation von Gasen und Flüssigkeiten wie Wasser aus. Die erfindungsgemäßen Hydraulikleitungen können aus nur einer Polyamidschicht bestehen oder einen mehrschichtigen Aufbau aufweisen. Im Falle eines mehrschichtigen Aufbaus können die weiteren Schichten zum Beispiel aus Polyolefinen wie z.B. aus Polyethylen, Polypropylen oder Propylen-Copolymeren wie z.B. Copolymeren aus Propylen und Acrylsäure oder Methacrylsäure oder Ethylen und Vinylalkohol (EVAL oder EVOH genannt) bestehen.

Die vorliegende Erfindung bezieht sich daher auf Kunststoffrohre oder Leitungen deren Wandung aus einer oder mehreren Schichten besteht. Einschichtige Kunststoffrohre aus Polyamid sind schon lange Stand der Technik und werden sehr vielseitig zum Beispiel für Brems-, Hydraulik-Kraftstoff-, Kühl-, Pneumatikleitungen eingesetzt (vgl. DIN 73378: "Rohre aus Polyamid für Kraftfahrzeuge").

Die im Kraftfahrzeugbau eingesetzten Kunststoffrohre oder -leitungen müssen allerdings eine Vielzahl von Anforderungen erfüllen. Für den Fall einer hydraulischen Kupplung kann deren Funktionsweise folgendermaßen beschrieben werden.

Die einzelnen Komponenten von Hydrauliksystemen sind: Behälter mit Hydraulikflüssigkeit, Kupplungspedal, Geberzylinder, Hydraulikleitung, Nehmerzylinder und Ausrücker, wobei die Aufzählung dieser Komponenten nur beispielhaft ist und je nach Hersteller verschiedene weitere Komponenten wie Magnetventile, Speicher, Rückförderpumpen hinzukommen können. Nach Betätigung des Kupplungspedals wird über den Geberzylinder ein Druck im System aufgebaut, der über die Hydraulikleitung auf den Nehmerzylinder übertragen wird. Als Transfermedium dient dabei das Hydrauliköl, was sich einerseits in der Leitung und andererseits im Hydraulikölvorratsbehälter befindet. Vom Nehmerzylinder wird die Kraft auf den Ausrücker übertragen, wodurch das Getriebe vom Motor getrennt wird.

Um eine einwandfreie Funktion der Kupplung zu gewährleisten müssen von der Hydraulikleitung u.a. folgende Anforderungen erfüllt werden: Eine genügende Berstfestigkeit bis 130°C, eine möglichst geringe Volumenänderung über den Temperaturbereich von -40 bis 130°C und eine Wasserpermeation von aussen in das Hydrauliköl von unter 2 bis 3%, keine Abbaureaktionen mit dem Hydrauliköl, eine hohe Temperaturbeständigkeit, sowie Kälteschlagzähigkeit bis -40°C. Besonders nachteilhaft für die einwandfreie Funktionsweise einer hydraulischen Kupplung ist eine zu hohe Wasseraufnahme des Öls, was bei Temperaturen oberhalb von 100°C zum Schäumen des Hydraulikmediums führt, und eine zu grosse Volumenänderung der Leitung, wodurch der Kupplungsweg verlängert wird.

Bislang werden Hydraulikleitungen üblicherweise als verzinkte Stahlleitungen ausgebildet, die mit Hilfe von Schellen oder dergleichen an den Wänden von Lastkraftwagen, insbesondere Ladebordwänden, befestigt werden oder die im Personenkraftwagenbereich als Kupplungsleitung eingesetzt werden. Metallrohre besitzen viele der oben gewünschten Eigenschaften. Allerdings ist die Herstellung dieser Metallrohre sehr aufwendig. Weiterhin ist nachteilig bei Rohren aus Stahl beispielsweise deren Gewicht und eine schlechte Korrosionsbeständigkeit. Auf Grund der hohen Steifigkeit ist der schnelle Einbau solcher Rohre erschwert.

Die in Rede stehenden Hydraulikleitungen bzw. Rohre befinden sich im Allgemeinen in einer aggressiven Umgebung, in denen diese Rohre dem chemischen Angriff von Mineralsalzlösungen und von der darin geförderten Flüssigkeit ausgesetzt sind und dabei, wie oben erwähnt wurde, hohen Drücken über einen weiten Temperaturbereich von z.B. -40°C bis +130°C Stand halten müssen. Die in den Hydraulikleitungen bzw. -rohren zur Kraftübertragung eingesetzten Medien müssen eine Sicherungsfunktion der Bremsen erfüllen. Die Bremsflüssigkeiten sind daher Inhalt von vielen internationalen Normen wie z.B. SAE J1703, FMVSS 116, ISO 4925. Die in FMVSS 116 beschriebenen Merkmale haben in den USA sogar Gesetzeskraft erlangt und gelten weltweit als maßgebend. Vom Department of Transportation (DOT) wurden bezüglich der wichtigsten Eigenschaften verschiedene Güteklassen definiert.

**Tabelle :**

| Bremsflüssigkeiten | | |
|---|---|---|
| Prüfung nach | FMVSS 116 | |
| Anforderungen/Stand | DOT3 | DOT4 |
| Trockensiedepunkt in °C (mindestens) | 205 | 230 |
| Naßsiedepunkt in °C (mindestens) | 140 | 155 |
| Kälteviskosität bei -40°C in mm²/s | 1500 | 1800 |

Der in der obigen Tabelle angegebene Naßsiedepunkt ist der Gleichgewichtssiedepunkt der Bremsflüssigkeit, nach dem diese unter definierten Bedingungen Wasser aufgenommen hat (ca. 3,5%). Vor allem bei hydroskopischen Flüssigkeiten auf Glykolbasis ergibt sich dadurch ein starkes Absinken des Siedepunktes. Die Prüfung des Naßsiedepunkts soll die Eigenschaften der gebrauchten Bremsflüssigkeit beschreiben, die hauptsächlich über Diffusion durch die Bremsschläuche Wasser aufnehmen kann. Dieser Effekt macht im wesentlichen den Wechsel der Bremsflüssigkeit im KFZ nach ein bis zwei Jahren erforderlich. Die Temperaturabhängigkeit der Viskosität sollte möglichst gering sein, um über den weiteren Einsatzbereich von -40°C bis 130°C eine sichere Funktion der Bremsen zu gewährleisten. Der jeweilige Typ der Hydraulik- oder Bremsflüssigkeit erfordert ein Anpassen der in der Bremsanlage eingesetzten Thermoplaste. Eine geringe Quellung der Thermoplaste ist erwünscht. Sie darf aber keinesfalls größer als ca. 10% sein, da sonst die Festigkeit dieser Bauteile abnimmt.

Glykoletherflüssigkeiten sind die hier am häufigsten eingesetzten Hydraulik- bzw. Bremsflüssigkeiten. Es handelt sich dabei hauptsächlich um Monoether niedriger Polyethylenglycole. Mit diesen Komponenten lassen sich Hydraulik- bzw. Bremsflüssigkeiten herstellen, die den Anforderungen von DOT 3 entsprechen. Von Nachteil ist, daß sie aufgrund der hygroskopischen Eigenschaften relativ schnell Wasser aufnehmen und dadurch der Siedepunkt sinkt.

Werden die freien OH-Gruppen dieser Glykolether teilweise oder weitgehend mit Borsäure verestert, so bilden sich Komponenten zur Herstellung wesentlich besserer DOT4-Flüssigkeiten. Sie binden wegen der Reaktionsfähigkeit mit Wasser dieses chemisch ab. Dabei fällt der Siedepunkt DOT3-Flüssigkeiten deutlich langsamer ab, so daß sich die Gebrauchsdauer erhöht.

Damit für die Montage der Hydraulikleitungen bzw. -Rohre eine genügende Flexibilität vorhanden ist bzw. unterschiedliche Bewegungen von Motor und Getriebe ausgeglichen werden können, werden für die Hydraulikleitung bewegliche Elemente eingesetzt.

Eine Möglichkeit sind dabei Wellrohre aus Metall, wie in **DE-A-199 51 947** beschrieben ist, welche allerdings den Nachteil hoher Kosten haben. Andere Lösungen sind Leitungen aus Elastomeren, die zur Erhöhung des Berstdruckes ein oder mehrere Schichten eines Verstärkungsgeflechts enthalten, das aus Polyester-, Polyamid-, oder Glasfasern oder aus Metalldrähten gebildet werden kann. Beispiele hierfür sind in der **DE-A-198 57 515** oder **EP 0 740 098 A1** zu finden. Dieses Herstellungsverfahren ist apparativ aufwendig, Recycliermöglichkeiten sind keine gegeben und die meisten Elastomere besitzen eine hohe Wasserpermeationsrate.

Um ein einfacheres Produktionsverfahren zu ermöglichen, wurden Hydraulikleitungen auf Basis von Thermoplasten entwickelt. Hierbei kommen Standardpolyamide zum Einsatz, die neben Hitze- und UV-Stabilisatoren, Farbstoffen und Verarbeitungshilfsmitteln keine weiteren Modifizierungen enthalten (s. **DIN 73378:** Mono-Rohre aus Polyamid für Kraftfahrzeuge). Diese Monoleitungen haben den Nachteil, dass sie zum einen eine relativ hohe Wasserpermeation von aussen nach innen erlauben und zum anderen im Bereich von -40 bis 120°C eine hohe Volumenänderung aufweisen. Zur Reduktion der Volumenänderung können solche Thermoplastrohre auch Verstärkungselemente besitzen (s. **US-A-2,614,058**).

Um die Nachteile von Monorohren zu beheben, wurden daher mehrschichtige Systeme entwickelt. Dies können Kombinationen von Elastomeren und Thermoplasten sein, die eine zusätzliche Verstärkung besitzen können. Beispielsweise ist in **US-A-4,617,213** eine Leitung beschrieben die folgenden Aufbau besitzt: Auf eine innere Polyamid 11-Schicht folgt eine Schicht aus Polychloropren-Kautschuk, der über einen Isocyanat-Haftvermittler mit der Innenschicht verbunden ist. Auf dieser Gummischicht ist eine Verstärkungsfaser angebracht, die nach aussen von einer weiteren Polychloroprenschicht umhüllt wird. Die Herstellung dieses Schichtaufbaus ist ebenfalls sehr aufwendig, so dass auch mehrschichtige reine Thermoplast-Lösungen entwickelt wurden.

**DE-8008440 U1** beschreibt zweischichtige Rohre aus PA6 oder PA66 (innen) einem PA11 oder PA12 (aussen). Diese haben zwar den Vorteil eines höheren Berstdrucks bei 120°C als ein reines PA11- oder PA12-Monorohr. Aber diese Konstruktion hat die Schwäche, dass wegen der unzureichenden Verträglichkeit der äusseren und inneren Materialien die Schichten nur schlecht aufeinander haften. Auch in der **DE-A-195 04 615**, in der mindestens dreischichtige Rohre beschrieben werden, mit einer Mittelschicht, die einen Anteil von bis zu 50% Copolymeren enthält, ist das Haftunsproblem nur unzureichend gelöst. Mehrschichtige verstärkte Leitungen sind in **DE-A-294 56 37** und **DE-A-199 39 689** beschrieben, die aber nur dann eine genügende Haftung besitzen, wenn die äussere und innere Schicht identisch oder im thermodynamischen Sinne mischbar sind, was nur für die wenigsten Polymerpaare gilt.

Es ist daher die Aufgabe der vorliegenden Erfindung eine neue konstruktive Lösung für eine Hydraulikleitung zur Verfügung zu stellen, die die folgenden Anforderungen erfüllt: Eine genügende Berstfestigkeit bis 130°C, eine möglichst geringe Volumenänderung über den Temperaturbereich von -40 bis 130°C, eine Wasserpermeation von aussen in das Hydrauliköl unter 2 bis 3%, keine Abbaureaktionen mit dem Hydrauliköl, eine hohe Temperaturbeständigkeit, sowie Kälteschlagzähigkeit bis -40°C.
Überraschenderweise wurde gefunden, dass diese vielfältigen Anforderungen erfindungsgemäß durch Formmassen erfüllt werden können, welche nanoskalige Füllstoffe enthalten.

Die obige Aufgabe wird somit durch die Merkmale von Anspruch 1 und Anspruch 15 gelöst.
In den Unteransprüchen sind vorteilhafte Ausführungsformen der Erfindung enthalten.

Die Erfindung betrifft daher eine Hydraulikleitung für Fahrzeuge auf Basis von thermoplastischen Polymeren, enthaltend mindestens eine Schicht aus einer Formmasse auf Basis von Polyamid, wobei die Polyamid-Formmasse nanoskalige Füllstoffe in einer Menge von 0,5 bis 50 Gew.-%, insbesondere in einer Menge von 1 bis 30 Gew.-%, pro 100 Gewichtsteilen der Polymermatrix enthält.

Die Erfindung betrifft weiterhin eine mehrschichtige Hydraulikleitung, enthaltend mindestens
- eine Innenschicht aus einer Formmasse auf Basis von mit nanoskaligen Füllstoffen gefüllten Polyamid-Formmassen,
- eine Polyolefin-Zwischenschicht oder eine Zwischenschicht aus einer Formmasse auf Basis von Ethylen/Vinylalkohol-Copolymeren,
- eine Polyamid-Aussenschicht.

Die erfindungsgemäß eingesetzten nanoskaligen Füllstoffe sind ausgewählt aus der Gruppe der Oxide, Oxidhidrate von Metallen oder Halbmetallen. Insbesondere sind die nanoskaligen Füllstoffe ausgewählt aus der Gruppe der Oxide und Oxidhydrate eines Elements, ausgewählt aus der Gruppe aus Bor, Aluminium, Gallium, Indium, Silizium, Germanium, Zinn, Titan, Zirkonum, Zink, Ytrium oder Eisen.

In einer besonderen Ausführungsform der Erfindung sind die nanoskaligen Füllstoffe entweder Siliziumdioxid oder Siliziumdioxid-Hydrate. In der Polyamidformmasse liegen die nanoskaligen Füllstoffe in einer Ausführungsform als ein gleichmäßig dispergiertes, schichtförmiges Material vor. Vor dem Einarbeiten in die Matrix besitzen sie eine Schichtdicke von 0,7 bis 1,2 mm und einen Zwischenschichtabstand der Mineralschichten von bis zu 5 nm.

In Polyamid (PA)-Systemen, in denen die Füllstoff-Partikel Dimensionen im Nanometer-Bereich aufweisen, ergeben sich folgende Effekte: Der thermische Ausdehnungskoeffizient ist verglichen mit den ungefüllten Matrixpolymeren besonders in Verarbeitungsrichtung deutlich reduziert, die feinverteilten Partikeln reduzieren die Permeation von Gasen und Flüssigkeiten wie Wasser ohne dass wie in klassischen gefüllten Systemen (Composites) die Zähigkeit reduziert wird. Durch die molekulare Verstärkung ergibt sich auch bei höheren Temperaturen eine Verbesserung der mechanischen Eigenschaften.

Um besonders die Wasseraufnahme des Hydrauliköls zu reduzieren können Monorohre aus sogenannten Nanocomposite-Materialien oder Mehrschichtrohre eingesetzt werden, wobei bei letzteren mindestens eine Schicht ein Nanocomposite-Material enthalten sein muss.

Als Füller zur Herstellung von Nanocomposites eignen sich solche Stoffe, welche in jeder beliebigen Stufe der Polymerherstellung zugegeben werden können und dabei im Nanometerbereich fein verteilt werden können. Dies sind erfindungsgemäß bevorzugt Mineralien, die bereits eine Schichtstruktur aufweisen, wie Schichtsilikate, Doppelhydroxide, wie Hydrotalcit oder auch Graphit. Ebenso eignen sich Nanofüllstoffe auf Basis von Siliconen, Silica oder Silsesquioxanen (s.Abb.1).

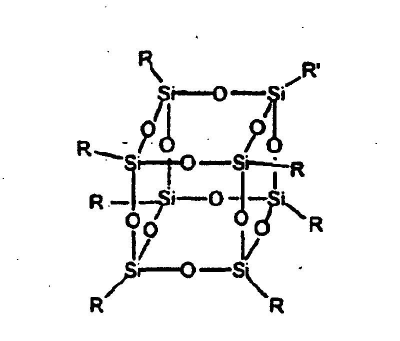

### Abb.1: Silsesquioxan

Unter Schichtsilikaten im erfindungsgemässen Sinne werden 1:1 sowie 2:1 Schichtsilikate verstanden . In diesen Systemen sind Schichten aus SiO₄-Tetraedern mit solchen aus M(O,OH)₆-Oktaedern in regelmässiger Weise miteinander verknüpft. M steht dabei für Metallionen wie A1, Mg, Fe. Bei den 1:1-Schichtsilikaten sind dabei jeweils eine Tetraeder- und eine Oktaederschicht miteinander verbunden. Beispiele hierfür sind Kaolin- und Serpentin-Minerale.

Bei den 2:1 Schichtsilikaten sind jeweils zwei Tetraeder- mit einer Oktaederschicht kombiniert. Sind nicht alle Oktaederplätze mit Kationen der benötigten Ladung zur Kompensation der negativen Ladung der SiO₄-Tetraeder sowie der Hydroxid-Ionen vorhanden, treten geladene Schichten auf. Diese negative Ladung wird durch den Einbau einwertiger Kationen wie Kalium, Natrium oder Lithium oder zweiwertiger wie Calcium in den Raum zwischen den Schichten ausgeglichen. Beispiele für 2:1-Schichtsilikate sind Talkum, Glimmer, Vermiculite, Illite sowie Smectite, wobei die Smectite zu denen auch der Montmorillonit gehört, sich wegen ihrer Schichtladung leicht mit Wasser quellen lassen. Weiterhin sind die Kationen leicht für Austauschprozesse zugänglich.

Die quellfähigen Schichtsilikate sind durch ihre Ionenautauschkapazität CEC (meq/g) und ihren Schichtabstand d_{L} charakterisiert. Typische Werte für CEC liegen bei 0,7 bis 0,8 meq/g. Der Schichtabstand bei einem trockenen unbehandeltem Montmorillonit liegt bei 1 nm und steigt durch Quellung mit Wasser oder Belegung mit organischen Verbindungen auf Werte bis zu 5 nm.

Beispiele für Kationen, die für Austauschreaktionen eingesetzt werden können, sind Ammoniumsalze von primären Aminen mit mindestens 6 Kohlenstoffatomen wie Hexanamin, Decanamin, Dodecanamin, hydrierte C₁₈-Tallölamine oder auch quarternäre Ammoniumverbindungen sowie Ammoniumsalze von α-,ω-Aminosäuren mit mindestens 6 Kohlenstoffatomen. Weitere Stickstoff enthaltende Aktivierungsreagentien sind auf Triazin basierende Verbindungen. Derartige Verbindungen sind beispielsweise in EP-A-1 074 581 beschrieben, auf dieses Dokument wird daher besonders Bezug genommen.

Als Anionen eignen sich Chloride, Sulfate oder auch Phosphate. Neben Ammoniumsalzen können auch Sulfonium- oder Phosphoniumsalze wie beispielsweise Tetraphenyl- oder Tetrabutylphosphoniumhalogenide zur Verwendung kommen.

Da üblicherweise Polymere und Mineralien sehr unterschiedliche Oberflächenspannungen besitzen, können erfindungsgemäß zusätzlich zum Kationenaustausch auch Haftvermittler zur Behandlung der Minerale verwandt werden. Hierbei eignen sich Titanate oder auch Silane wie γ-Aminoproplytriethoxysilan.

Als Polyamide (PA) für die erfindungsgemäßen Formmassen, aus denen die erfindungsgemäßen Hydraulikleitungen hergestellt werden können, werden vorteilhafterweise Polymerisate aus aliphatischen C₆-C₁₂-Lactamen oder ω- Aminocarbonsäuren mit 4 bis 44 Kohlenstoffatomen, bevorzugt 4 bis 18 Kohlenstoffatomen, oder Polykondensate verwendet, erhältlich aus der Polykondensation von mindestens einem Diamin aus der Gruppe der aliphatischen Diamine mit 4 bis 12 C-Atomen, der cycloaliphatischen Diamine mit 7 bis 22 C-Atomen und der aromatischen Diamine mit 6 bis 22 C-Atomen in Kombination mit mindestens einer Dicarbonsäure aus der Gruppe aus aliphatischen Dicarbonsäuren mit 4 bis 12 C-Atomen, cycloaliphatischen Dicarbonsäuren mit 8 bis 24 C-Atomen und aromatischen Dicarbonsäuren mit 8 bis 20 C-Atomen. Die ω―Aminocarbonsäuren oder die Lactame sind ausgewählt aus der Gruppe aus ε-Aminocapronsäure, 11-Aminoundecansäure, 12-Aminododecansäure, ε-Caprolactam, Enanthlactam, ω―Laurinlactam. Weiterhin ist es erfindungsgemäß möglich, Blends der vorgenannten Polymerisate bzw. Polykondensate einzusetzen. Erfindungsgemäß geeignete Diamine, die mit einer Dicarobonsäure kombiniert werden, sind beispielsweise 2,2,4- oder 2,4,4-Trimethylhexamethylendiamin, 1,3- oder 1,4-Bis(aminomethyl)cyclohexän, Bis(p-aminocyclohexyl)methan, m- oder p-Xylylendiamin, Ethyldiamin, 1,4-Diaminobutan, 1,6-Diaminohexan, 1,10-Diaminodecan, 1,12-Diaminododecan, Cyclohexyldimethylenamin, und die Dicarbonsäuren ausgewählt sind aus der Gruppe aus Bemsteinsäure, Glutarsäure, Adipinsäure, Suberinsäure, Pimelinsäure, Korksäure, Azelainsäure, Sebazinsäure, Dodecanditcarbonsäure, 1,6-Cyclo-hexandicaronsäure, Terephthalsäure, Isophthalsäure, Naphthalindicarbonsäure.

Beispiele für Dicarbonsäuren sind Bernstein-, Glutar-, Adipin-, Pimelin-, Kork-, Azelain- und Sebacinsäure, Dodecandicarbonsäure, 1,6-Cyclohexandicarbonsäure, Terephthalsäure, Isophthalsäure und Naphthalindicarbonsäure.

Konkrete Beispiele für die (Co)Polyamide für die erfindungsgemäße Hydraulikleitung sind daher solche Homo- oder Copolyamiden aus der Gruppe aus PA6, PA66, PA11, PA46, PA12, PA1212, PA1012, PA 610, PA612, PA69, PA6T, PA6I, PA10T, PA12T, PA12I, deren Gemische oder Copolymere auf Basis dieser Polyamide, wobei PA11, PA12, PA1212, PA10T, PA12T, PA12T/12, PA101T/12, PA12T/106, PA10T/106 bevorzugt sind. Bevorzugt sind erfindungsgemäß auch Copolymere auf Basis von den vorgenannten Polyamiden wie z. B. PA12T/12, PA10T/12, PA12T/106 und PA10T/106. Weiterhin können erfindungsgemäß auch PA6/66, PA6/612, PA6/66/610, PA6/66/12, PA6/6T und PA6/6I eingesetzt werden.

Die vorliegende Erfindung betrifft auch eine Hydraulikleitung, enthaltend mindestens eine Innenschicht aus einer Formmasse auf Basis von mit nanoskaligen Füllstoffen gefüllten Polyamidformmassen, die weiter oben schon beschrieben wurden, einer Polyolefin-Zwischenschicht oder einer Zwischenschicht aus einer Formmasse auf Basis von Ethylen/Venylalkohol-Copolymeren, und einer Polyamid-Außenschicht. Als Polyamide für die Innen- und Außenschicht können konkret solche aus der Gruppe aus Polyamid 6, Polyamid 11, Polyamid 46, Polyamid 12, Polyamid 1212, Polyamid 1012, Polyamid 610, Polyamid 612, Polyamid 69, Polyamid 10T, Polyamid 12T, Polyamid 12I, deren Gemische oder Copolymere auf Basis dieser Polyamide, wobei Polyamid 11, Polyamid 12, Polyamid 1212, Polyamid 10T, Polyamid 12T, Polyamid 12T/12, Polyamid 10T/12, Polyamid 12T/106, Polyamid 10T/106 bevorzugt sind, oder aus der Gruppe aus Polyamid 6/66, Polyamid 6/612, Polyamid 6/66/610, Polyamid 6/66/12, Polyamid 6/6T, Polyamid 6/6I eingesetzt werden.

Das Poleolefin der Zwischenschicht kann entweder Polypropylen oder eine Mischung aus Ethylen/α-Olefin-Copolymer und Ethylen/Alkyl(meth)acrylat/Maleinsäureanhydrid oder Glycidyl(meth)acrylat-Copolymer sein.

Bevorzugterweise wird das Polyamid für die Innenschicht ausgewählt aus der Gruppe aus Polyamid 12, Polyamid 6, Polyamid 610, Polyamid 612. Das Polyolefin-Zwischenschicht besteht aus Polypropylen. Gemäß dieser Ausführungsform kann die Außenschicht aus Polyamid 12 bestehen.

In einer weiteren Ausführungsform kann die Innenschicht aus einer Formmasse aus Basis von Polyamid 6, Polyamid 46, Polyamid 66, Polyamid 69, Polyamid 610 oder Polyamid 612 bestehen, gefolgt von einer Schicht aus einer Formmasse auf Basis von Ethylenvenylalkohol-Copolymeren, gegebenenfalls mit einer dazwischen liegenden Haftvermittlerschicht und einer Außenschicht aus Polyamid 12. Derartige Haftvermittler sind dem Fachmann bekannt. Hier wird beispielsweise auf die DE 101 10 964.4 der gleichen Anmelderin verweisen.

Diesen (Co)Polyamiden können aber auch für bestimmte Zwecke noch andere, übliche Polymere, die dem Fachmann bekannt sind, zugesetzt sein. Die verwendeten (Co)Polyamide können die üblichen Zusatzstoffe enthalten wie UV- und Hitzestabilisatoren, Kristallisationsbeschleuniger, Weichmacher, Flammschutzmittel und Gleitmittel.

Die folgenden Beispiele erläutern die vorliegende Erfindung, ohne sie einzuschränken.

Eingesetzte Materialien:

Polyamid 12: Hochviskoses PA12 mit folgenden Eigenschaften

| | Schmelzpunkt (°C) | relative Viskosität (m-Kresol) | MVI, 275°C, 5 kg (cm³/10min) | Aschegehalt (%) |
|---|---|---|---|---|
| Standard PA12 | 178 | 2.25 | 20 | 0.1 |
| PA12-Nanocomposite | 178 | 2.18 | 13 | 4 |

### Schichtsilikat:

Na-Montmorillonit behandelt mit 30 meq/100g Mineral Methyl-tallöl-bis-2-hydroxyethylammoniumchlorid. d_{L}: 1.85 nm

Die Nanocomposite-Formmassen wurden auf einem 30mm-Doppelschneckenextruder ZSK 25 der Firma Werner&Pfleiderer bei Temperaturen zwischen 240 und 280°C hergestellt. Dabei wurde das Polymer in den Einzug des Extruders und das Mineral in den Einzugsbereich des Extruders und/ oder die Schmelze dosiert. Die Zugabe an modifiziertem Schichtsilikat beträgt 6 Gew.-%.

Die Prüfung der erfindungsgemässen und nicht erfindungsgemässen Formmassen wurden gemäss folgenden Vorschriften durchgeführt:
- MVI:: (Melt volume index) bei 275°C/5 kg nach ISO 1133
- SZ:: Schlagzähigkeit nach ISO 179/1eU
- KSZ:: Kerbschlagzähigkeit nach ISO 179/1eA
- Streckspannung:: ISO 527
- Reissdehnung:: ISO 527
- Zug-E-Modul:: ISO 527

| | | | PA12-Nanocomposite | Standard PA12 |
|---|---|---|---|---|
| Zug-E-Modul | tr. | MPa | 2500 | 1500 |
| Zug-E-Modul | kond. | MPa | 1900 | 1100 |
| Streckspannung | tr. | MPa | 55 | 45 |
| Streckspannung | korid. | MPa | 50 | 40 |
| Reissdehnung | tr. | % | 110 | 200 |
| Reissdehnung | kond. | % | 170 | 200 |
| Schlagzähigkeit, 23°C | kond. | kJ/m² | o.B. | o.B. |
| Schlagzähigkeit, -30°C | kond. | kJ/m² | o.B. | o.B. |
| Kerbschlagzähigkeit, 23°C | kond. | kJ/m² | 6 | 10 |
| Kerbschlagzähigkeit, -30°C | kond. | kJ/m² | 7 | 7 |
| HDT A | | °C | 60 | 45 |
| HDT B | | °C | 130 | 115 |

Zur Bestimmung der Wasseraufnahme wurden Mono-Rohre auf einer Nokia-Rohrextrusionsanlage in den Dimensionen 8 x 2.25 mm hergestellt. Diese Rohre wurden anschliessend mit wasserfreien Hydraulikölen vom Typ DOT 3 und DOT 4 gefüllt und verschlossen. Anschliessend wurden diese Rohre 70 Stunden in einem Wasserbad bei 70°C gelagert. Danach wurde der Wassergehalt des Hydrauliköls bestimmt. Die nachfolgende Tabelle zeigt, dass in den erfindungsgemässen Rohren eine deutlich niedrigere Waseraufnahme des Hydrauliköls stattfindet.

| | Wasseraufnahme DOT 3 | Wasseraufnahme DOT 4 |
|---|---|---|
| Standard PA12 | 2,7 | 3,2 |
| PA12-Nanocomposite | 1,4 | 1,8 |

## Patentansprüche

1. Hydraulikleitung für Fahrzeuge auf Basis von thermoplastischen Polymeren, enthaltend mindestens eine Schicht aus einer Formmasse auf Basis von Polyamid, **dadurch gekennzeichnet, daß** die Polyamid-Formmasse nanoskalige Füllstoffe in einer Menge von 0,5 bis 50 Gew.-%, insbesondere in einer Menge von 1 bis 30 Gew.-%, pro 100 Gewichtsteilen der Polymermatrix enthält.

2. Hydraulikleitung gemäß Anspruch 1, **dadurch gekennzeichnet, daß** die nanoskaligen Füllstoffe ausgewählt sind aus der Gruppe der Oxide, Oxidhydrate von Metallen oder Halbmetallen.

3. Hydraulikleitung gemäß Anspruch 2, **dadurch gekennzeichnet, daß** die nanoskaligen Füllstoffe ausgewählt sind aus der Gruppe der Oxide und Oxidhydrate eines Elements, ausgewählt aus der Gruppe Bor, Aluminium, Magnesium, Gallium, Indium, Silizium, Germanium, Zinn, Titan, Zirkonium, Zink, Ytrium oder Eisen.

4. Hydraulikleitung gemäß Anspruch 3, **dadurch gekennzeichnet, daß** die nanoskaligen Füllstoffe ausgewählt sind aus Siliziumdioxid und Siliziumdioxid-Hydraten.

5. Hydraulikleitung gemäß irgendeinem der Ansprüche 1 bis 4, **dadurch gekennzeichnet, daß** die Polyamid-Formmasse in der Polyamid-Matrix als Füllstoff ein gleichmäßig dispergiertes, schichtförmiges Mineral, welches vor dem Einarbeiten in die Polyamid-Matrix eine Schichtdicke von 0,7 bis 1,2 nm und einen Zwischenschichtabstand der Mineralschichten von bis zu 5 nm aufweist, enthält.

6. Hydraulikleitung gemäß einem der vorhergehenden Ansprüche 1 bis 5, **dadurch gekennzeichnet, daß** das in der Polymer-Matrix gleichmäßig dispergierte Mineral eine Kationentauschkapazität von 0,5 bis 2 meq/g Mineral, insbesondere von 0,7 bis 0,8 meq/g Mineral, aufweist.

7. Hydraulikleitung gemäß einem der vorhergehenden Ansprüche 1 bis 6, **dadurch gekennzeichnet, daß** das Mineral mit einem Aktivierungs- bzw. Modifizierungsmittel aus der Gruppe der Triazine, der Ammoniumsalze von primären Aminen mit mindestens 6 Kohlenstoffatomen wie Hexanamin, Decanamin, Dodecanamin, hydrierten C18-Tallölamine oder quarternären Ammoniumverbindungen, Ammoniumsalzen von α-,ω-Aminosäuren mit mindestens 6 Kohlenstoffatomen, sowie Sulfonium- oder Phosphoniumsalzen behandelt worden ist.

8. Hydraulikleitung gemäß irgendeinem der Ansprüche 1 bis 7, **dadurch gekennzeichnet, daß** die nanoskaligen Füllstoffe Schichtsilikate, aus der Gruppe aus Montmorillonit, Saponit, Beidellit, Nontronit, Hektorit, Stevensit, Vermiculit, Illite, Pyrosit, der Gruppe der Kaolin- und Serpentin-Minerale, Doppelhydroxide, Graphit, oder solche Füllstoffe auf Basis vom Siliconen, Silica oder Silsesquioxanen sind, wobei Schichtsilikate besonders bevorzugt sind.

9. Hydraulikleitung gemäß einem der vorhergehenden Ansprüche 1 bis 8, **dadurch gekennzeichnet, daß** das Mineral mit Haftvermittlern behandelt worden ist und bis zu 2 Gew.-% in der Polyamid-Formmasse enthalten ist.

10. Hydraulikleitung gemäß einem der vorhergehenden Ansprüche 1 oder 5, **dadurch gekennzeichnet, daß** die (Co)Polyamide Polymerisate aus aliphatischen C₆-C₁₂ Lactamen oder ω-Aminocarbonsäuren mit 4 bis 44 Kohlenstoffatomen, bevorzugt 4 bis 18 Kohlenstoffatomen, oder Copolymere sind, erhältlich aus der Polykondensation von mindestens einem Diamin aus der Gruppe der aliphatischen Diamine mit 4 bis 12 C-Atomen, der cycloaliphatischen Diamine mit 7 bis 22 C-Atomen und der aromatischen Diamine mit 6 bis 22 C-Atomen in Kombination mit mindestens einer Dicarbonsäure aus der Gruppe aus aliphalischen Dicarbonsäuren mit 4 bis 12 C-Atomen, cycloaliphatischen Dicarbonsäuren mit 8 bis 24 C-Atomen und aromatischen Dicarbonsäuren mit 8 bis 20 C-Atomen, wobei ebenfalls Blends der vorgenannten Polymerisate und/oder Polykondensate geeignet sind.

11. Hydraulikleitung gemäß Anspruch 10, **dadurch gekennzeichnet, daß** die ω―Aminocarbonsäuren und die Lactame ausgewählt sind aus der Gruppe aus ε-Aminocapronsäure, 11-Aminoundecansäure, 12-Aminododecansäure, ε-Caprolactam, Enanthlactam, ω-Laurinlactam.

12. Hydraulikleitung gemäß Anspruch 10, **dadurch gekennzeichnet, daß** die Diamine ausgewählt sind aus der Gruppe aus 2,2,4- oder 2,4,4-Trimethylhexamethylendiamin, 1,3- oder 1,4-Bis(aminomethyl)cyclohexan, Bis(p-aminocyclohexyl)methan, m- oder p-Xylylendiämin, Ethyldiamin, 1,4-Diaminobutan, 1,6-Diaminohexan, 1,10-Diaminodecan, 1,12-Diaminododecan, Cyclohexyldimethylenamin, und die Dicarbonsäuren ausgewählt sind aus der Gruppe aus Bernsteinsäure, Glutarsäure, Adipinsäure, Suberinsäure, Pimelinsäure, Korksäure, Azelainsäure, Sebazinsäure, Dodecanditcarbonsäure, 1,6-Cyclo-hexandicaronsäure, Terephthalsäure, Isophthalsäure, Naphthalindicarbonsäure.

13. Hydraulikleitung gemäß einem der vorhergehenden Ansprüche 1 bis 12, **dadurch gekennzeichnet, daß** den (Co)-Polyamiden noch weitere Polymere, in Mengen bis zu 30 Gew.-%, aus der Gruppe aus Schlagzähmodifikatoren, Elastomeren oder Kautschuk, der Gruppe der Verstärkungs- und Füllstoffe, der UV-Stabilisatoren, der Antioxidstanzen, der Pigmente, Farbstoffe, Nukleierungsmittel, Kristallations-Beschleuniger, -Verzögerer, Fließhilfsmittel, Gleitmittel, Entformungsmittel, Flammschutzmittel sowie Mittel, die die elektrische Leitfähigkeit verbessern, zugesetzt sind.

14. Hydraulikleitung gemäß Anspruch 13, **dadurch gekennzeichnet, daß** als Schlagzähmodifikatoren EPM oder EPDM in Mengen von 5 bis 20 Gew.-%, insbesondere in Mengen von 5 bis 10 Gew.-%, den Polyamid-Formmassen zugesetzt sind.

15. Hydraulikleitung gemäß einem oder mehreren der vorhergehenden Ansprüche 1 bis 14, enthaltend mindestens
- eine Innenschicht aus einer Formmasse auf Basis von mit nanoskaligen Füllstoffen gefüllten Polyamid-Formmassen gemäß einem der vorhergehenden Ansprüche 1 bis 14
- eine Polyolefin-Zwischenschicht oder eine Zwischenschicht aus einer Formmasse auf Basis von Ethylen/Vinylalkohol-Copolymeren,
- eine Polyamid-Aussenschicht.

16. Hydraulikleitung gemäß Anspruch 15, **dadurch gekennzeichnet, daß** als (Co)Polyamide für die Innen- und die Außenschicht solche eingesetzt werden, ausgewählt aus der Gruppe aus Polymerisaten aus aliphatischen C₆-C₁₂ Lactamen oder ω-Aminocarbonsäuren mit 4 bis 44 Kohlenstoffatomen, bevorzugt 4 bis 18 Kohlenstoffatomen, oder Copolymere sind, erhältlich aus der Polykondensation von mindestens einem Diamin aus der Gruppe der aliphatischen Diamine mit 4 bis 12 C-Atomen, der cycloaliphatischen Diamine mit 7 bis 22 C-Atomen und der aromatischen Diamine mit 6 bis 22 C-Atomen in Kombination mit mindestens einer Dicarbonsäure aus der Gruppe aus aliphatischen Dicarbonsäuren 4 bis 12 C-Atomen, cycloaliphatischen Dicarbonsäuren mit 8 bis 24 C-Atomen und aromatischen Dicarbonsäuren mit 8 bis 20 C-Atomen, wobei ebenfalls Blends der vorgenannten Polymerisate und/oder Polykondensate geeignet sind.

17. Hydraulikleitung gemäß Anspruch 15 oder 16, **dadurch gekennzeichnet, daß** das Polyolefin der Zwischenschicht entweder Polypropylen oder eine Mischung aus Ethylen/α-Olefin-Copolymer und Ethylen/Alkyl(meth)acrylat/Maleinsäureanhydrid oder Glycidyl(meth)acrylat-Copolymer ist.

18. Hydraulikleitung gemäß einem der Ansprüche 15 bis 17,**dadurch gekennzeichnet, daß** das Polyamid der Innenschicht ausgewählt ist aus der Gruppe aus Polyamid 12, Polyamid 6, Polyamid 610, Polyamid 612, das Polyolefin der Zwischenschicht aus Polypropylen besteht und die Aussenschicht aus Polyamid 12 besteht.

19. Hydraulikleitung gemäß einem der vorhergehenden Ansprüche 15 bis 18, **dadurch gekennzeichnet, daß** sie eine Innenschicht aus einer Formmasse auf Basis von Polyamid 6, Polyamid 46, Polyamid 66, Polyamid 69, Polyamid 610 oder Polyamid 12 enthält, gefolgt von einer Schicht aus einer Formmasse auf Basis von Ethylen/Vinylalkohol-Copolymeren, gegebenenfalls einer dazwischen liegenden Haftvermittlerschicht und einer Aussenschicht aus Polyamid 12.

20. Hydraulikleitung gemäß einem der vorhergehenden Ansprüche 1 bis 19, **dadurch gekennzeichnet, daß** sie wenigstens teilweise eine gewellte Wandung aufweist.

21. Verfahren zur Herstellen der Hydraulikleitung gemäß einem der Ansprüche 1 bis 20, in einer oder mehreren Stufen durch Spritzgiessen, Coextrusion, Extrusions-Blasformen, Pressen oder Ummantelungsverfahren.
